# EUROPEAN PATENT SPECIFICATION

(11) **EP 2 414 469 B1**
(45) Date of publication and mention of the grant of the patent: **04.12.2013**
(21) Application number: 10713604.6
(22) Date of filing: 30.03.2010
(51) Int. Cl.: C09D 175/16, H01B 3/30, C08G 18/48, C08G 18/67, C08K 5/521, C08G 18/76, C08F 290/06

(54) **RADIATION CURABLE RESIN COMPOSITION FOR WIRE COATING**
STRAHLENHÄRTBARE HARZZUSAMMENSETZUNG ZUR DRAHTUMMANTELUNG
COMPOSITION DE RÉSINE DURCISSABLE AUX RAYONNEMENTS POUR REVÊTEMENT DE FILS

(30) Priority: 31.03.2009 JP 2009086315; 19.03.2010 JP 2010063762; 19.03.2010 JP 2010063760
(43) Date of publication of application: 08.02.2012
(73) Proprietor: DSM IP Assets B.V., 6411 TE Heerlen (NL); JSR Corporation, Tokyo 105-8640 (JP)
(72) Inventor: YAMAGUCHI, Hiroshi, Tokyo 105-8640 (JP); KAMO, Satoshi, Tokyo 105-8640 (JP); KUROSAWA, Takahiko, Tokyo 105-8640 (JP)
(74) Representative: Jansen, Cornelis Marinus
(86) International application number: PCT/EP2010/054171
(87) International publication number: WO 2010/112491

(56) References cited:
- EP-A1- 0 329 441
- JP-A- 2009 266 355
- US-A- 4 607 084

## Description

The present invention relates to a radiation curable resin composition for coating electrical wires, specifically, power wires, telephone wires, wires for connecting between electronic equipment or within electronic equipment.

Polyethylene (PE), which has superior electrical characteristics and transmission characteristics, has been used for power wires, electrical wires, telephone line cables, wires for connecting between electronic equipment or within electronic equipment, automotive wiring and the like for an insulator and PE and polyvinyl chloride (PVC) in the outer sheath. Television lead wires and the like use PE coatings or rubber in the outer sheath. In addition, PVC, polyethylene terephthalate (PET), cross-linked PE and the like are widely used for automotive wiring coatings; see Japanese Published Unexamined Patent Application No. 2001-312925, Japanese Published Unexamined Patent Application No. 2005-187595, Japanese Published Unexamined Patent Application No. 2006-348137 and Japanese Published Unexamined Patent Application No. 2007-45952.

In addition, examples of using radiation curable resins for wire coatings have been disclosed in Japanese Published Unexamined Patent Application No. 2008-251435.

However, there are cases in conventional wire coating materials where the manufacturing efficiency for the coating layer and the adhesion with the center conductor are insufficient even though there is a strong requirement for strength as a protective material.

Therefore, is an object of the present invention to provide a resin composition for wire coatings that has excellent adhesion with the center conductor as well as having good manufacturing efficiency for the coating layer and sufficient strength.

Thus, the present inventors focused on urethane (meth)acrylate based radiation curable resin compositions to develop wire coating materials to replace conventional PVC and PE. As a result of various investigations, they have discovered that a wire coating material with good adherence with the center conductor may be obtained even though the manufacturing efficiency of the coating layer is good and there is sufficient strength if a combination of urethane (meth)acrylate with a specific structure, a compound having a cyclic structure and one ethylenically unsaturated group and a specific compound having a phosphoric acid ester structure is used and have completed the present invention.

In other words, the present invention provides a radiation curable resin composition for wire coating that includes the following ingredients (A), (B) and (D):
(A) a mixture of a urethane (meth)acrylate having a structure derived from an aliphatic polyol, a urethane (meth)acrylate having a structure derived from a cyclic polyol and a urethane (meth)acrylate not having a structure derived from a polyol,
(B) a compound having a cyclic structure and one ethylenically unsaturated group,
(D) a compound given by the following formula (4a) 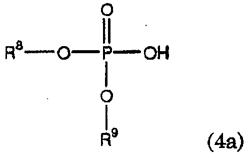 wherein, R⁸ is a monovalent organic group having an ethylenically unsaturated group, and R⁹ is a hydrogen atom or a monovalent organic group that may have an ethylenically unsaturated group.

In the present invention, the wire coating layer (may also simply be called coating layer) is a resin coating layer used on the wire. If it is a resin coating layer provided on the outside of a center conductor formed by a metal wire such as copper or aluminum, it is not limited in particular. It typically includes an insulating layer for an insulated wire having an insulating layer that covers the center conductor, a sheath layer for a cable that covers a single or a plurality of insulated wires with a sheath layer, a sheath layer provided on the outside of a shield layer of a cable having a shield layer. In addition, the wire coating material is a resin composition used in manufacturing the wire coating layer.

If the composition of the present invention is used, a wire coating layer with superior strength (specifically, strength shown by Young's modulus and total elongation) and heat resistance may be formed simply and uniformly by exposure to radiation such as ultra violet radiation. The adherence of this protective layer to the center conductor is excellent, and the wire coating layer may be manufactured efficiently.

Since a wire having sufficient strength even with a thin coating layer may be obtained by using the radiation curable wire coating material of the present invention, it is particularly suitable for use in power wires, for example motor coils and other power wiring.

In the following, the various ingredients constituting the composition of the present invention will be described.

The urethane (meth)acrylate, which is ingredient (A) of the present invention, is a mixture of (A1) a urethane (meth)acrylate having a structure derived from an aliphatic polyol, (A2) a urethane (meth)acrylate having a structure derived from a cyclic polyol and (A3) a urethane (meth)acrylate not having a structure derived from a polyol.

Since the (A1) urethane (meth)acrylate having a structure derived from an aliphatic polyol has a comparatively flexible structure derived from the aliphatic polyol, it lowers the Young's modulus of the cured material and increases the total elongation. For example, the resistance to the bending stress applied when a coated wire is wound onto a bobbin can be improved. The ingredient (A1) preferably has the structure given by the following formula.

HA-(DI-aPOL-)ₘ-DI-HA

wherein, aPOL is the structure derived from the aliphatic polyol, DI a structure derived from diisocyanate, and HA is a structure derived from (meth)acrylate containing a hydroxyl group, m is 1 to 4, with 1 being preferable.

Since the (A2) urethane (meth)acrylate having a structure derived from a cyclic polyol has a comparatively rigid structure derived from the polyol having a cyclic structure, it increases the Young's modulus of the cured material and decreases the total elongation. When an outside stress is applied, it can effectively protect the center conductor. The ingredient (A2) preferably has the structure given by the following formula.

HA-(DI-cPOL-)ₙ-DI-HA

wherein, cPOL is the structure derived from the cyclic polyol, DI a structure derived from diisocyanate, and HA is a structure derived from (meth)acrylate containing a hydroxyl group, n is 1 to 4, with 1 being preferable.

The (A3) urethane (meth)acrylate not having a structure derived from a polyol does not have a structured derived from a polyol. The molecular weight is comparatively small, and it has a rigid structure. In addition, since the ingredient (A3) has a low molecular weight, the density of urethane bonds can be increased. The density of hydrogen bonds formed in the cured material may be increased, and a wire coating with superior resistance to external stress may be formed. The ingredient (A3) preferably has the structure given by the following formula.

HA-DI-HA

wherein, DI is a structure derived from diisocyanate, and HA is a structure derived from (meth)acrylate containing a hydroxyl group.

A wire coating layer with superior heat resistance and good adherence to the center conductor may be formed by using the urethane (meth)acrylate with the specific structures represented by those in (A).

The urethane (meth)acrylate that is ingredient (A) may be obtained by mixing the urethane (meth)acrylate (A1) having a structure derived from an aliphatic polyol that is obtained by reacting (a1) an aliphatic polyol, (b) polyisocyanate and (c) (meth)acrylate containing a hydroxyl group, the urethane (meth)acrylate (A2) having a structure derived from a cyclic polyol obtained by reacting (a2) a cyclic polyol, (b) polyisocyanate and (c) (meth)acrylate containing a hydroxyl group and the urethane (meth)acrylate (A3) that does not have a structured derived from a polyol obtained by reacting (b) polyisocyanate and (c) (meth)acrylate containing a hydroxyl group without using a polyol. In addition, the urethane (meth)acrylate (A) may be obtained by reacting (a1) an aliphatic polyol, (a2) a cyclic polyol, (b) polyisocyanate and (c) (meth)acrylate containing a hydroxyl group. In this case, the amounts of (a1), (a2), (b) and (c), which are the synthetic raw materials, are determined by calculating mass ratios of the desired (A1), (A2) and (A3) and the molar ratios for the various raw materials and theoretically necessary from the structures of the various urethane (meth)acrylates.

The aliphatic polyol (a1) has an aliphatic structure, and as long as the polyol does not have an aromatic ring structure, alicyclic structure or other cyclic structure, it is not limited specifically, and examples include polyethylene glycol, polypropylene glycol, polytetramethylene glycol, polyhexamethylene glycol or aliphatic polyether polyols obtained by ring-opening copolymerization of two or more ion polymerizable cyclic compounds. Examples of the ion polymerizable cyclic compounds above include ethylene oxide, propylene oxide, butene-1-oxide, isobutene oxide, tetrahydrofuran, 2-methyltetrahydrofuran, 3-methyltetrahydrofuran. Examples of specific combinations of the two or more ion polymerizable cyclic compounds above include tetrahydrofuran and propylene oxide, tetrahydrofuran and 2-methyltetrahydrofuran, tetrahydrofuran and 3-methyltetrahydrofuran, tetrahydrofuran and ethylene oxide, propylene oxide and ethylene oxide, butene-1-oxide and ethylene oxide, a terpolymer of tetrahydrofuran, butene-1-oxide and ethylene oxide. Among these, polypropylene glycol and polytetramethylene glycol are preferable.

The molecular weight for the aliphatic polyol (a1) used in the synthesis of the urethane (meth)acrylate (A) is preferably 1000 to 4000 g/mol as the polystyrene average molecular weight found by gel permeation chromatography, and more preferably 1500 to 2500 g/mol. A preferable range for the mechanical characteristics, particularly the total elongation, of the wire coating layer may be created by being within the range of molecular weight for the polyol (a1) above.

Examples of commercial products for the aliphatic polyol (a1) include PTMG650, PTMG1000, PTMG2000 (the preceding manufactured by Mitsubishi Chemical Corp.), PPG-400, PPG1000, PPG2000, PPG3000, PPG4000, EXCENOL720, 1020, 2020 (the preceding manufactured by Asahi Glass Urethane), PEG1000, Unisafe DC1100, DC1800 (the preceding manufactured by NOF Corporation), PPTG2000, PPTG1000, PTG400, PTGL2000 (the preceding manufactured by Hodogaya Chemical Co., Ltd.), Z-3001-4, Z-3001-5, PBG2000A, PBG2000B (the preceding manufactured by Dai-ichi Kogyo Seiyaku Co., Ltd.). A product with a suitable molecular weight may be selected and used from among these commercial products according to the type of urethane (meth)acrylate targeted in the synthesis.

The cyclic polyol (a2) is not specifically limited as long as it has a cyclic structure such as an aromatic ring structure or an alicyclic structure, and examples include alkylene oxide adduct polyol of bisphenol A, alkylene oxide adduct polyol of bisphenol F, hydrogenated bisphenol A, hydrogenated bisphenol F, alkylene oxide adduct polyol of hydrogenated bisphenol A, alkylene oxide adduct polyol of hydrogenated bisphenol F, alkylene oxide adduct polyol of hydroquinone, alkylene oxide adduct polyol of naphthohydroquinone, alkylene oxide adduct polyol of anthrahydroquinone, 1,4-cyclohexane polyol and alkylene oxide adduct polyol thereof, tricyclodecane polyol, tricyclodecane dimethanol, pentacyclopentadecane polyol, pentacyclopentadecane dimethanol, alkylene oxide adduct polyol, alkylene oxide adduct polyol of bisphenol F, alkylene oxide adduct polyol of 1,4-cyclohexane polyol. Among these, alkylene oxide adduct polyol of bisphenol A is preferable.

The preferable molecular weight for the cyclic polyol (a2) is 300 to 1000 g/mol as the polystyrene average molecular weight found by gel permeation chromatography, and more preferably 300 to 800 g/mol. By being within the range of molecular weight for the polyol (a2) above, it is possible to create a preferable range for the mechanical characteristics, particularly the total elongation, of the wire coating layer.

For the cyclic polyol (a2), for example, UNIOL DA400, DA700, DA1000 and DB400 (the preceding manufactured by NOF Corporation), tricyclodecane dimethanol (Mitsubishi Chemical Corp.) may be acquired as commercial products.

Moreover, in addition to the polyether polyols above, polyester polyols, polycarbonate polyols, polycaprolactone polyols may be used for the aliphatic polyol (a1) and the cyclic polyol (a2).

Examples of the polyisocyanate (b), specifically for a diisocyanate, include 2.4-trilene diisocyanate, 2,6-trilene diisocyanate 1,3-xylylene diisocyanate, 1,4-xylylene diisocyanate, 1,5-naphthalene diisocyanate, m-phenylene diisocyanate, *p*-phenylene diisocyanate, 3.3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylene-bis(4-cyclohexylisocyanate), 2,2,4-trimethylhexamethylene diisocyanate, bis(2-isocyanatoethyl)fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethylxylene diisocyanate, 2,5-bis(isocyanatomethyl)-bicyclo[2.2.1]heptane, 2,6-bis(isocyanatomethyl)-bicyclo[2.2.1]heptane. In particular, 2,4-tolylene diisocyanate, isophorone diisocyanate, xylylene diisocyanate, methylene-bis(4-cyclohexylisocyanate) are preferable. These polyisocyanates may be used individually or in a combination of two or more.

Examples of the (meth)acrylate containing a hydroxyl group (c) include 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butane polyol mono(meth)acrylate, 2-hydroxyalkyl(meth)acryloyl phosphate, 4-hydroxycyclohexyl (meth)acrylate, 1,6-hexane polyol mono(meth)acrylate, neopentyl glycol mono(meth)acrylate, trimethylolpropane di(meth)acrylate, trimethylolethane di(meth)acrylate, pentaerythritol tri(meth)acrylate, dipentaerythritol penta(meth)acrylate. In addition, compounds obtained through addition reactions of alkyl glycidyl ethers, allyl glycidyl ethers, glycidyl (meth)acrylate and other compounds containing a glycidyl group and a (meth)acrylate may be used. Of these (meth)acrylates containing a hydroxyl group, 2-hydroxyethyl (meth)acrylate, 2-hydroxypropyl (meth)acrylate, in particular, are preferable. These (meth)acrylate compounds containing a hydroxyl group may be used individually or in a combination of two or more.

In the synthesis reaction for these urethane (meth)acrylates that are ingredient (A), it is preferable to use 0.01 to 1 parts by mass of a urethane catalyst, such as copper naphthenate, cobalt naphthenate, zinc naphthenate, dibutyl tin dilaurate, triethyl amine, 1,4-diazabicyclo[2.2.2]octane, 2,6,7-trimethyl-1,4-diazabicyclo[2.2.2]octane, to 100 parts by mass of the total amount of the reactants. In addition, the reaction temperature is normally 10 to 90 °C, and reacting at 30 to 80 °C is particularly preferable.

The order of addition for the various raw materials when synthesizing the urethane (meth)acrylate (A) is not limited in particular, but it is preferable to add the (a1) and/or (a2) polyols after adding the polyisocyanate (b) and the (meth)acrylate containing a hydroxyl group (c). Adding the various raw materials in this order makes it more difficult for oligomers where the polyols and polyisocyanates are bonded alternately to form than when the polyols and polyisocyanates are added at the beginning and makes it easier to obtain the targeted mixture of (A1), (A2) and (A3).

The urethane (meth)acrylates that are ingredient (A) are normally mixed in at 30 to 80 % by mass in total of the total 100 % by mass of the composition from the standpoint of mechanical strength and coating properties of the wire coating layer, and in particular a mixture of 40 to 70 % by mass is preferable. The amount of the ingredients (A1), A2) and (A3) mixed in may be adjusted according to the physical properties targeted for the wire coating layer. The urethane (meth)acrylate that is ingredient (A1) is normally mixed in at 20 to 50 % by mass of the total 100 % by mass of the composition, but it is preferably mixed in at 22 to 40 % by mass. The urethane (meth)acrylate that is ingredient (A2) is normally mixed in at 1 to 10 % by mass of the total 100 % by mass of the composition, but it is preferably mixed in at 2 to 8 % by mass. The urethane (meth)acrylate that is ingredient (A3) is normally mixed in at 1 to 29 % by mass of the total 100 % by mass of the composition, but it is preferably mixed in at 10 to 25 % by mass.

The compound having a cyclic structure and one ethylenically unsaturated group that is ingredient (B) is a polymerizable monofunctional compound having a cyclic structure. The mechanical characteristics of the wire coating layer obtained using the composition of the present invention are adjusted by using this compound for ingredient (B), and both adherence to the center conductor and mechanical strength may be established. Examples of the cyclic structure are an alicyclic structure, heterocyclic structure containing a nitrogen atom or oxygen atom, aromatic ring, and of these and alicyclic structure is particularly preferable.

Examples of the compound having a cyclic structure and one ethylenically unsaturated group (B) are (meth)acrylates having an alicyclic structure such as isobornyl (meth)acrylate, bornyl (meth)acrylate, tricyclodecanyl (meth)acrylate, and dicyclopentanyl (meth)acrylate, benzyl (meth)acrylate, 4-butylcyclohexyl (meth)acrylate, acryloylmorpholine, vinylimidazole, vinylpyridine. Furthermore, there are the compounds given by the following formulas (1) through (3). 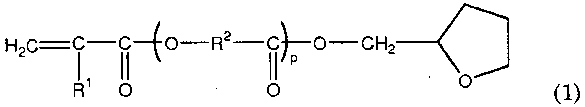 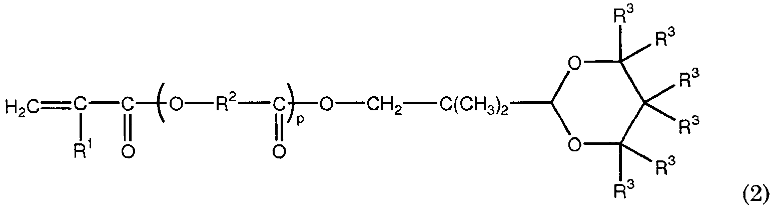 wherein, R¹ is a hydrogen atom or a methyl group, R² an alkylene group with 2 to 8 carbon atoms preferably 2 to 5, R³ a hydrogen atom or a methyl group and p is a number, preferably from 1 to 4. 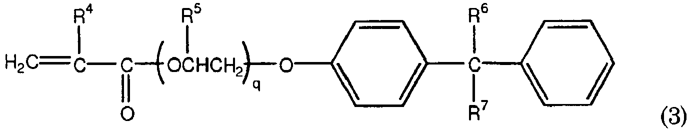 wherein, R⁴, R⁵, R⁶ and R⁷ are independent from each other and are a hydrogen atom or methyl group, and q is a number from 1 to 5.

Of these polymerizable monofunctional compounds (B), compounds having cyclic structures are preferable, and among them isobornyl (meth)acrylate and other compounds having cross-linked cyclic structures are preferable. Ingredients (B) having cyclic structures have a rigid structure; therefore, they may prevent the Young's modulus of the cured material from being too small and may make for a balance in the Young's modulus suitable for the wire coating layer and the physical properties of rupture strength and total elongation.

IBXA (manufactured by Osaka Organic Chemical Industry Co., Ltd.), Aronix M-111, M-113, M-114, M-117 and TO-1210 (the preceding manufactured by Toagosei Co., Ltd.) may be used as commercially available products for these polymerizable monofunctional compounds (B).

These monofunctional compounds having a cyclic structure that are ingredient (B) are mixed in at 15 to 60 % by mass of the total 100 % by mass of the composition from the standpoint of the strength of the wire coating and adherence to the center conductor, and 25 to 50 % by mass is more preferable, with 30 to 50 % by mass being particularly preferable. However, it is preferable for N-vinylpyrrolidone and N-vinylcaprolactam, (meth)acrylates and other lactams containing vinyl to be mixed in at 5 % by mass or less of the total composition even if they are ingredient (B), more preferably 2 % by mass and most preferably not at all because they may reduce the storage stability of the composition if they coexist with ingredient (D), which will be described hereinafter. In addition, it is preferable for ingredient (B) to contain isobornyl (meth)acrylate and the amount of the isobornyl (meth)acrylate in the mixture is more preferably 50 % by mass of the total 100 % by mass of ingredient (B). A cured material with superior mechanical strength may be obtained by using isobornyl (meth)acrylate.

A compound having two or more ethylenically unsaturated groups (C) may be mixed into the composition of the present invention to the extent that it does not inhibit the effects of the invention. The compound having two or more ethylenically unsaturated groups (C) is a polymerizable polyfunctional compound. Examples of the polymerizable polyfunctional compound (C) include trimethylolpropane tri(meth)acrylate, trimethylolpropane trioxyethyl (meth)acrylate, pentaerythritol tri(meth)acrylate, triethylene glycol diacrylate, tetraethylene glycol di(meth)acrylate, tricyclodecanediyldimethanol diacrylate, 1,4-butane polyol di(meth)acrylate, 1,6-hexane polyol di(meth)acrylate, neopentyl glycol di(meth)acrylate, tripropylene glycol di(meth)acrylate, neopentyl glycol di(meth)acrylate, both terminal (meth)acrylic acid adducts of bisphenol A diglycidyl ether, pentaerythritol tri(meth)acrylate, pentaerythritol tetra(meth)acrylate, polyester di(meth)acrylate, tris(2-hydroxyethyl)isocyanurate tri(meth)acrylate, tris(2-hydroxyethyl)isocyanurate di(meth)acrylate, tricyclodecane dimethanol di(meth)acrylate, di(meth)acrylate of ethylene oxide or propylene oxide adduct polyol of bisphenol A, di(meth)acrylate of ethylene oxide or propylene oxide addition polyol of hydrogenated bisphenol A, epoxy(meth)acrylate where (meth)acrylate is added to diglycidyl ether of bisphenol A, triethylene glycol divinyl ether.

These compounds having two or more ethylenically unsaturated groups (C) may been mixed in at 0 to 5 % by mass of the total 100 % by mass of the composition, but more preferably at 0 to 2 % by mass and most preferably not mixed in at all. If the mixture exceeds 5 % by mass, the wire coating layer may be excessively rigid and the mechanical strength, and adherence to the center conductor may be lost.

Ingredient (D) used in the composition of the present invention is a compound given by the following formula (4a). The adherence to the center conductor is improved by mixing in ingredient (D). It is presumed that the adherence is improved by the hydroxyl group that bonds to the phosphorus atom in ingredient (D) coordinating to a metal atom that forms the center conductor and the ethylenically unsaturated group bonding to the resin matrix. Therefore, with a compound where all of the hydroxyl groups that phosphoric acid has are esterified, it is not effective for improving adherence because there are no hydroxyl groups. In addition, when a carboxylic acid ester is used in place of the phosphoric acid ester of ingredient (D), the adherence improvement effect is too small. 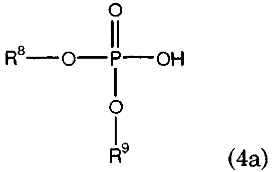 wherein, R⁸ is a monovalent organic group having an ethylenically unsaturated group, and R⁹ is a hydrogen atom or a monovalent organic group that may have an ethylenically unsaturated group.

Ingredient (D) is preferably a compound given by the following formula (4). 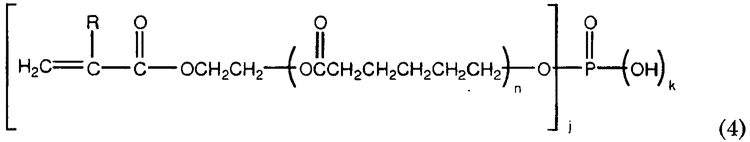 wherein, R is a hydrogen atom or methyl group, and n is 0 to 1, j is 1 to 2, and kis3-j.

Commercial products for the compound given a formula (4) above include KAYAMER PM-2 and PM21 (manufactured by Nippon Kayaku Co., Ltd.).

The mixing amount for ingredient (D) is 0.01 to 1% by mass of the total 100 % by mass of the composition from the standpoint of adherence to the center conductor and strength of the wire coating layer, more preferably 0.05 to 0.5 % by weight.

A silicone compound (E) may be further mixed into the composition of the present invention from the standpoint of adherence to the center conductor and weather resistance of the wire coating layer. Examples of the silicone compound include polyether-modified silicone, alkyl-modified silicone, urethane acrylate-modified silicone, urethane-modified silicone, methylstyryl-modified silicone, epoxy polyether-modified silicone, alkylaralkyl polyether-modified silicone.

Furthermore, a polymerization initiator (F) may be mixed into the composition of the present invention. The polymerization initiator (F) is preferably a photoinitiator. Here, examples of the photopolymerization initiator include 1-hydroxy cyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl methyl ketal, 1-(4-isopropylphenyl)-2-hydroxy-2-methylpropan-1-one, 2-hydroxy-2-methyl-1-phenylpropan-1-one, thioxanethone, diethylthioxanthone, 2-isopropylthioxanthone, 2-chlorothioxanthone, 2-methyl-1- [4-(methylthio)phenyl] -2-morphono-propan-1-one, 2,4,6-trimethylbenzoyl diphenylphosphine oxide, bis-(2,6-dimethoxybenzoyl)-2,4,4-trimethylpentylphosphine oxide; IRGACURE 184, 369, 651, 500, 907, CGI 1700, CGI 1750, CGI 1850, CG24-61; Darocur 1116 and 1173 (the preceding manufactured by Ciba Specialty Chemicals Co.); Lucirin TPO (manufactured by BASF); Ubecryl P36 (manufactured by UCB). In addition, examples of photosensitizers include triethylamine, diethylamine, *N*-methyldiethanole amine, ethanolamine, 4-dimethylaminobenzoic acid, methyl 4-dimethylaminobenzoate, ethyl 4-dimethylaminobenzoate, isoamyl 4-dimethylaminobenzoate; Ubecryl P102, 103, 104 and 105 (manufactured by UCB).

The polymerization initiator (F) is mixed in at 0.1 to 10 % by mass of the total 100 % by mass of the composition, and 0.3 to 7 % by mass is particularly preferable.

Various types of additives such as antioxidants, coloring agents, ultraviolet absorbers, light stabilizers, agents for preventing thermal polymerization, leveling agents, surfactants, storage stabilizers, plasticizers, lubricants, solvents, fillers, aging preventives, wettability improvers, and coating surface improvers may be added to the composition of the present invention.

Moreover the composition of the present invention is cured by radiation, but that may be infrared radiation, visible light radiation, ultraviolet radiation, X-rays, electron beams, alpha rays, beta rays, gamma rays while the like, and it is typically ultraviolet radiation.

The viscosity of the composition of the present invention is 0.5 to 10 Pa·s at 25 °C, and more preferably 1 to 5 Pa·s. Application of the wire coating material when the wire is manufactured is made easy because the viscosity is within this range, and the manufacturing efficiency for the wire is improved.

The Young's modulus of the wire coating layer obtained by curing the composition of the present invention varies according to the type of wire coating layer, but for the insulating layer of a coated wire, it is preferably 300 to 1500 MPa, more preferably 400 to 1200 MPa, and particularly preferably 500 to 1000 MPa. A wire coating layer that is resilient to outside stress may be obtained by having the Young's modulus within this range.

The rupture strength and total elongation of the wire coating layer obtained by curing the composition of the present invention varies according to the type of wire coating layer, but for the insulating layer of a coated wire, it is preferably 20 to 60 MPa, and more preferably 30 to 50 MPa. A total elongation of 80 to 250 % is preferable, and more preferably it is 90 to 200 %. A wire with high durability for outside stress may be obtained by having the rupture strength and total elongation within these ranges.

The composition of the present invention is useful as a radiation curable resin composition for wire coating of electric wires, specifically power wires, telephone wires, automotive wiring. If the composition of the present invention is applied and exposed to radiation, a wire coating layer that is uniform with superior strength may be formed. In addition, the wire coating layer formed by the present invention has superior strength and the adherence to the center conductor is excellent; therefore, the workability for wiring is excellent.

Next, the present invention will be described in detail through examples, but the present invention is not limited in any way to these examples.

### Examples

### Reparation Example 1:

### Synthesis of urethane (meth)acrylate of ingredient (A)

15.38 g of isobornyl acrylate, 0.015 g of 2,6-di-*t*-butyl-*p*-cresol, 7.80 g of toluene diisocyanate and 0.023 g of dibutyltin dilaurate were put into a reaction vessel provided with a stirrer. This was cooled until the liquid temperature was 20 °C to 15 °C while stirring. 6.00 g of hydroxyethyl acrylate was added. It was stirred for two hours while controlling the temperature at 35 °C or less and reacted. Next, 28.34 g of polytetramethylene glycol with a number average molecular weight of 2000 g/mol, 1.79 g of ethylene oxide adduct diol of bisphenol A with a number average molecular weight of 400 g/mol and 0.022 g of dibutyltin dilaurate were added to the mixture described above, and after stirring at room temperature for one hour, it was stirred for two hours in an oil bath at 65 °C. When the residual isocyanate was 0.1 % by mass or less, the reaction was ended.

The amount of raw materials used corresponds to 5.0 parts by mass of the urethane acrylate having the structure given by the following formula (5), 30.0 parts by mass of the urethane acrylate having the structure given by the following formula (6) and 18.0 parts by mass of the urethane acrylate having the structure given by the following formula (7). The urethane acrylate (A) obtained was called UA-1. UA-1 is a mixture of urethane acrylates having the structure is given by the following formulas (5) through (7).

HEA-TDI-DA400-TDI-HEA (5)

HEA-TDI-PTMG2000-TDI-HEA (6)

HEA-TDI-HEA (7)

wherein, HEA indicates a structure derived from hydroxyethyl acrylate, TDI a structure derived from toluene diisocyanate, DA400 a structure derived from ethylene oxide adduct diol of bisphenol A with a number average molecular weight of 400 g/mol and PTMG2000 a structure derived from polytetramethylene glycol with a number average molecular weight of 2000 g/mol.

### Comparative preparation example 1:

### Synthesis of urethane (meth)acrylate not corresponding to ingredient (A)

0.024 g of 2,6-di-*t*-butyl-*p*-cresol, 13.46 g of toluene diisocyanate and 0.024 g of dibutyltin dilaurate were put into a reaction vessel provided with a stirrer. This was cooled until the liquid temperature was 20 °C to 15 °C while stirring. 8.98 g of hydroxyethyl acrylate was added. It was stirred for two hours while controlling the temperature at 35 °C or less and reacted. Next, 77.46 g of polytetramethylene glycol with a numerical average molecular weight of 2000 g/mol was added and after stirring for one hour at room temperature, it was stirred for two hours in an oil bath at 65 °C. When the residual isocyanate was 0.1 % by mass or less, the reaction was ended. The urethane acrylate obtained was called UA-2. UA-2 is a urethane acrylate having the structure given by the previous formula (6).

### Comparative preparation example 2:

### Synthesis of urethane (meth)acrylate not corresponding to ingredient (A)

36.92 g of isobornyl acrylate , 0.015 g of 2,6-di-*t*-butyl-*p*-cresol, 11.54 g of toluene diisocyanate and 0.025 g of dibutyltin dilaurate were put into a reaction vessel provided with a stirrer. This was cooled until the liquid temperature was 20 °C to 15 °C while stirring. 7.70 g of hydroxyethyl acrylate was added. It was stirred for two hours while controlling the temperature at 35 °C or less and reacted. Next, 38.15 g of polytetramethylene glycol with a number average molecular weight of 2000 g/mol, 5.63 g of ethylene oxide adduct diol of bisphenol A with a number average molecular weight of 400 g/mol and 0.025 g of dibutyltin dilaurate were added to the mixture described above, and after stirring at room temperature for one hour, it was stirred for two hours in an oil bath at 65 °C. When the residual isocyanate was 0.1 % by mass or less, the reaction was ended. The amount of raw materials used corresponds to 11.2 parts by mass of the urethane acrylate having the structure given by the previous formula (5) and 40.0 parts by mass of the urethane acrylate having the structure given by the previous formula (6). The urethane acrylate obtained was called UA-3. UA-3 is a mixture of urethane (meth)acrylates having the structures given in the previous formulas (5) through (6).

### Examples 1 - 3 and Comparative Examples 1 - 5

Ingredients with the compositions shown in Table 1 were put into a reaction vessel equipped with a stirrer, stirred for one hour while controlling the liquid temperature at 50 °C and liquid curable resin compositions were obtained.

### Test Example

The curable liquid resin compositions obtained in the above examples and comparative examples were cured using the following method and test samples were prepared. The various evaluations described below were carried out. The results are also shown in Table 1.

### 1. Young's modulus:

The curable liquid resin composition was applied to a glass plate using an applicator bar with a thickness of 250 µm. This was cured by exposure to ultraviolet rays with an energy of 1 J/cm² in air, and a film for measuring the Young's modulus were obtained. Strip samples were cut from this film to have drawing part with a width of 6 mm and a length of 25 mm, and tension tests were carried out at a temperature of 23 °C and 50 % humidity. The elastic stress rate was 1 mm/min and the Young's modulus was found from the tensile strength with a 2.5 % deformation.

### 2. Rupture strength and total elongation:

The rupture strength and total elongation of the samples were measured at the following measurement conditions using a tensile tester (Shimadzu Corp., AGS-50G).
Elastic stress rate: 50 mm/min
Gauge length (measurement distance): 25 mm
Measurement temperature: 23 °C
Relative humidity: 50 % RH

### 3. Glass transition temperature (Tg):

The resin liquid was applied to a glass plate using an applicator sewed that it was 200 µm thick, cured with irradiance of 1.0 J/cm² and a cured film obtained. This film was cut into 3 mm x 35 mm samples, and dynamic viscoelasticity was measured with an Orientec Co., Ltd. Rheovibron DDV-01FP. The temperature exhibiting the maximum value for the loss tangent (tan δ) for a vibration frequency of 3.5 Hz was defined as the glass transition temperature, and glass transition temperatures were evaluated.

### 4. Adhesion to copper and aluminum:

The adhesive strength of cured materials of the compositions obtained in the examples and comparative examples was measured.

The liquid composition was applied to a copper plate using an applicator with a thickness of 190 µm, exposed to 0.5 J/cm² ultraviolet radiation in a nitrogen atmosphere and a cured film with a thickness of 130 µm was obtained. This sample was left at rest for 24 hours at a temperature of 23 °C and 50 % humidity. Thereafter, strip samples with a width of 10 mm were created on the copper plate from this cured film. Adhesive strength tests were carried out on the samples according to JIS Z0237 using a tensile tester. The adhesive strength with the metal was found from the tensile strength at an elastic stress rate of 50 mm/min. In addition, the adhesive strength in the case where the copper plate was replaced by an aluminum plate was evaluated in the same manner.

**Table 1**

| Ingredient (% by mass) | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|
| (A) | UA-1 | 51.2 | 51.2 | 51.2 | | | 51.2 | 51.2 | 51.2 |
| (not A) | UA-2 | | | | 51.2 | | | | |
| | UA-3 | | | | | 51.2 | | | |
| (B) | Isobornyl acrylate | 28.0 | 45.4 | 28.0 | 28.0 | 28.0 | 28.2 | 28.0 | |
| | Acryloylmorpholine | 17.4 | | | 17.4 | 17.4 | 17.4 | 17.4 | |
| (not B) | 2-ethylhexyl acrylate | | | 17.4 | | | | | 45.4 |
| (C) | Lucirin TPO | 0.9 | 0.9 | 0.9 | 0.9 | 0.9 | 0.9 | 0.9 | 0.9 |
| | Irgacure 184 | 1.9 | 1.9 | 1.9 | 1.9 | 1.9 | 1.9 | 1.0 | 1.9 |
| (D) | PM-21 | 0.1 | 0.1 | 0.1 | 0.1 | 0.1 | | | |
| (not D) | Acrylic acid | | | | | | | 0.1 | 0.1 |
| | Igranox 254 | 0.5 | 0.5 | 0.5 | 0.5 | 0.5 | 0.5 | 0.5 | 0.5 |
| | Total | 100 | 100 | 100 | 100 | 100 | 100 | 100 | 100 |
| Young's modulus (MPa) Rupture strength (MPa) Total elongation (%) Tg (@ 3.5 Hz) | | 700 | 600 | 510 | 100 | 280 | 720 | 690 | 260 |
| | | 39 | 35 | 32 | 33 | 30 | 39 | 40 | 31 |
| | | 95 | 95 | 100 | 160 | 140 | 95 | 92 | 145 |
| | | 110 | 90 | 80 | 55 | 62 | 109 | 106 | 59 |
| | | 30 | 33 | 42 | 40 | 42 | 4 | 6 | 38 |
| | | 120 | 124 | 141 | 140 | 136 | 8 | 20 | 138 |

In Table 1:
Isobornyl acrylate: IBXA (manufactured by Osaka Organic Chemical Industry Co., Ltd.)
Acryloylmorpholine: ACMO (manufactured by Kohjin Co., Ltd.)
Lucirin TPO: 2,4,6-trimethylbenzoyl diphenylphosphine oxide (manufactured by BASF Japan)
Irgacure 184: 1-hydroxy cyclohexyl phenyl ketone (manufactured by Ciba Specialty Chemicals Co., Ltd.)
Irganox 254: triethylene glycol bis-[3-(3-t-butyl-4-hydroxy, 5-methylphenyl)propionate] (manufactured by Ciba Specialty Chemicals Co., Ltd.)
PM-21: compound where, in previous formula (4), R = methyl group, n = 1, j = 2 and k = 1 (KAYAMER PM-21, manufactured by Nippon Kayaku Co., Ltd.)

As is clear from Table 1, the cured material formed from the resin composition of the present invention containing ingredients (A), (B) and (D) has excellent characteristics for wire coating material, and the adhesion to the center conductor is excellent, so it is useful as a composition for wire coatings.

With Comparative Example 1 containing a urethane acrylate that does not correspond to ingredient (A) in place of ingredient (A), the Young's modulus was too small because UA-2 had a soft structure. Likewise, with Comparative Example 2, which did not contain ingredients (A), UA-3 did not contain ingredient (A3), so it was softer than ingredient (A), and the Young's modulus was too small. Since UA-3 and UA-2 had rigid structures, Comparative Example 2 had a higher Young' s modulus than Comparative Example 1. Comparative Example 3, which did not contain ingredient (D), has a reduction in adhesive strength for the aluminum plate and copper plate. In Comparative Example 4, which mixed in acrylic acid in place of ingredient (D), the adhesive strength for the aluminum plate and the copper plate was also low, and it was confirmed that acrylic acid cannot replace ingredient (D). The Young's modulus was reduced for Comparative Example 5 which mixed in 2-ethylhexyl acrylate, which does not correspond to ingredient (B) and instead of ingredient (B).

## Claims

1. A radiation curable resin composition for wire coating comprising the following ingredients (A), (B) and (D):
(A) a mixture of a urethane (meth)acrylate having a structure derived from an aliphatic polyol, a urethane (meth)acrylate having a structure derived from a cyclic polyol and a urethane (meth)acrylate not having a structure derived from a polyol,
(B) a compound having a cyclic structure and one ethylenically unsaturated group,
(D) a compound given by the following formula (4a) 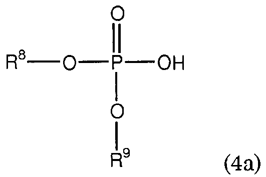 wherein, R⁸ is a monovalent organic group having an ethylenically unsaturated group, and R⁹ is a hydrogen atom or a monovalent organic group that may have an ethylenically unsaturated group.

2. The radiation curable resin composition for wire coating according to claim 1 wherein ingredient (B) contains isobornyl (meth)acrylate and the content thereof is 50 % by mass of the ingredient (B).

3. The radiation curable resin composition for wire coating according to claim 1 or 2 wherein ingredient (D) is a compound given by the following formula (4) 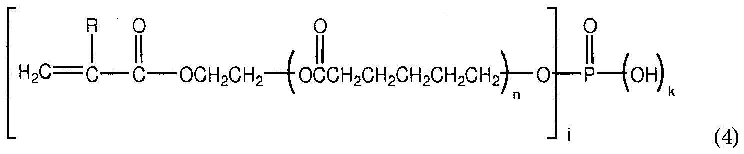 wherein, R is a hydrogen atom or methyl group, n is 0 to 1, j is 1 to 2 and k is 3 - j.

4. The radiation curable resin composition for wire coating according to any of claims 1 through 3 wherein the content for a lactam compound containing an N-vinyl group is 5 % by mass or less of the total composition.

5. The radiation curable resin composition for wire coating according to any of claims 1 through 4 wherein the content for a compound having two or more ethylenically unsaturated groups (C) is 5 % by mass or less of the total composition.

6. The radiation curable resin composition for wire coating according to any of claims 1 through 5 used for an insulating layer of an insulated wire.

7. A wire coating layer obtained by curing the composition according to any one of claims 1 through 6.

8. A wire having a coating layer according to claim 7.

## Patentansprüche

1. Strahlungshärtbare Harzzusammensetzung für Drahtbeschichtung, umfassend folgende Inhaltsstoffe (A), (B) und (D):
(A) ein Gemisch eines Urethan(meth)acrylats mit einer Struktur, abgeleitet von einem aliphatischen Polyol, eines Urethan(meth)acrylats mit einer Struktur, abgeleitet von einem zyklischen Polyol, und eines Urethan(meth)acrylats, das keine von einem Polyol abgeleitete Struktur aufweist,
(B) ein Stoff mit einer zyklischen Struktur und einer ethylenisch ungesättigten Gruppe,
(D) ein Stoff dargestellt durch folgende Formel (4a): 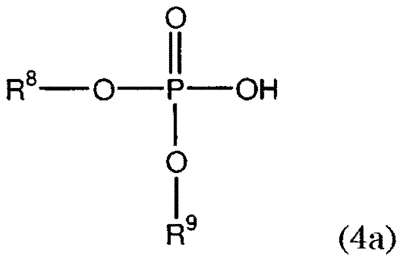 wobei R⁸ eine monovalente organische Gruppe mit einer ethylenisch ungesättigten Gruppe ist und R⁹ ein Wasserstoffatom oder eine monovalente organische Gruppe ist, die eine ethylenisch ungesättigte Gruppe aufweisen kann.

2. Strahlungshärtbare Harzzusammensetzung für Drahtbeschichtung nach Anspruch 1, wobei Inhaltsstoff (B) Isobornyl(meth)acrylat enthält, und der Gehalt davon 50 % der Masse des Inhaltsstoffs (B) beträgt.

3. Strahlungshärtbare Harzzusammensetzung für Drahtbeschichtung nach Anspruch 1 oder 2, wobei der Inhaltsstoff (D) ein Stoff ist, dargestellt durch folgende Formel (4) 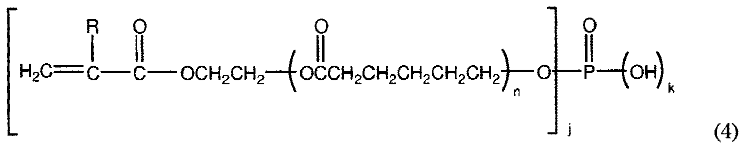 wobei R ein Wasserstoffatom oder eine Methylgruppe ist, n 0 bis 1 ist, j 1 bis 2 ist und k 3 - j ist.

4. Strahlungshärtbare Harzzusammensetzung für Drahtbeschichtung nach einem der Ansprüche 1 bis 3, wobei der Gehalt an einem Lactam-Stoff, enthaltend eine N-Vinyl-Gruppe, 5 % der Masse oder weniger der Gesamtzusammensetzung ist.

5. Strahlungshärtbare Harzzusammensetzung für Drahtbeschichtung g nach einem der Ansprüche 1 bis 4, wobei der Gehalt an einem Stoff mit zwei oder mehr ethylenisch ungesättigten Gruppen (C) 5 % der Masse oder weniger der Gesamtzusammensetzung ist.

6. Strahlungshärtbare Harzzusammensetzung für Drahtbeschichtung nach einem der Ansprüche 1 bis 5, verwendet für eine Isolierschicht eines isolierten Drahts.

7. Drahtbeschichtungsschicht, erhalten durch Härten des Zusammensetzung nach einem der Ansprüche 1 bis 6.

8. Draht mit einer Beschichtungsschicht nach Anspruch 7.

## Revendications

1. Composition de résine durcissable par rayonnement pour l'enrobage de fils comprenant les ingrédients (A), (B) et (D) suivants :
(A) un mélange d'un (méth)acrylate d'uréthane ayant une structure dérivée d'un polyol aliphatique, d'un (méth)acrylate d'uréthane ayant une structure dérivée d'un polyol cyclique et d'un (méth)acrylate d'uréthane n'ayant pas une structure dérivée d'un polyol,
(B) un composé ayant une structure cyclique et un groupe éthyléniquement saturé,
(D) un composé donné par la formule (4a) suivante 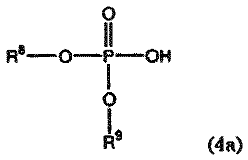 où R⁸ est un groupe organique monovalent ayant un groupe éthyléniquement insaturé et R⁹ est un atome d'hydrogène ou un groupe organique monovalent qui peut avoir un groupe éthyléniquement insaturé.

2. Composition de résine durcissable par rayonnement pour l'enrobage de fils selon la revendication 1 où l'ingrédient (B) contient du (méth)acrylate d'isobornyle et sa teneur est 50 % en masse de l'ingrédient (B).

3. Composition de résine durcissable par rayonnement pour l'enrobage de fils selon la revendication 1 ou 2 où l'ingrédient (D) est un composé donné par la formule (4) suivante 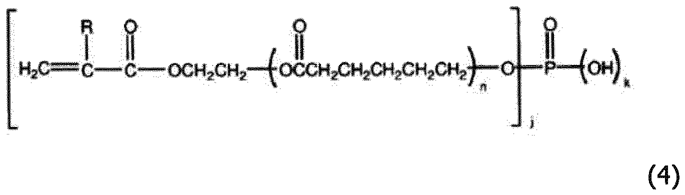 où R est un atome d'hydrogène ou un groupe méthyle, n est 0 à 1, j est 1 à 2 et k est 3-j.

4. Composition de résine durcissable par rayonnement pour l'enrobage de fils selon l'une quelconque des revendications 1 à 3 où la teneur pour un composé lactame contenant un groupe N-vinyle est 5 % en masse ou moins de la composition totale.

5. Composition de résine durcissable par rayonnement pour l'enrobage de fils selon l'une quelconque des revendications 1 à 4 où la teneur pour un composé ayant deux ou plusieurs groupes éthyléniquement insaturés (C) est 5 % en masse ou moins de la composition totale.

6. Composition de résine durcissable par rayonnement pour l'enrobage de fils selon l'une quelconque des revendications 1 à 5 utilisée pour une couche isolante d'un fil isolé.

7. Couche d'enrobage de fils obtenue par durcissement du composé selon l'une quelconque des revendications 1 à 6.

8. Fil ayant une couche d'enrobage selon la revendication 7.
